# EUROPÄISCHE PATENTSCHRIFT

(11) **EP 2 193 055 B1**
(45) Veröffentlichungstag und Bekanntmachung des Hinweises auf die Patenterteilung: **08.06.2011**
(21) Anmeldenummer: 08775229.1
(22) Anmeldetag: 21.07.2008
(51) Int. Cl.: B60S 1/08, H01H 19/58

(54) **ANTRIEBSVORRICHTUNG FÜR EINEN SCHEIBENWISCHER**
DRIVE DEVICE FOR A WINDSHIELD WIPER
DISPOSITIF D'ENTRAÎNEMENT POUR UN ESSUIE-GLACE

(30) Priorität: 17.09.2007 DE 102007044342
(43) Veröffentlichungstag der Anmeldung: 09.06.2010
(73) Patentinhaber: Robert Bosch GmbH, 70442 Stuttgart (DE)
(72) Erfinder: HAWIGHORST, Achim, 77830 Buehlertal (DE)
(86) Internationale Anmeldenummer: PCT/EP2008/059500
(87) Internationale Veröffentlichungsnummer: WO 2009/037023

(56) Entgegenhaltungen:
- EP-A- 1 804 262
- DE-A1- 19 609 973
- DE-B- 1 061 641
- GB-A- 2 175 493

## Beschreibung

Die Erfindung bezieht sich auf eine Antriebsvorrichtung für einen Scheibenwischer nach dem Oberbegriff des Anspruches 1.

### Stand der Technik

In der DE 196 09 973 A1 wird eine Antriebsvorrichtung für einen Scheibenwischer beschrieben, die mit einem Parkstellungsschalter ausgestattet ist, der den elektrischen Antriebsmotor auch nach dem Abschalten der Wischanlage durch den Fahrer noch so lange mit Strom versorgt, bis die Wischer ihre Parkstellung am unteren Rand der Windschutzscheibe eingenommen haben. Der Parkstellungsschalter wird von der Antriebsvorrichtung in der Weise betätigt, dass der Antriebsmotor, auch nachdem vom Fahrer der zu betätigende Wischerschalter auf "Aus" gestellt worden ist, bis zum Erreichen der Parkstellung der Wischer noch mit Strom versorgt wird.

Der Parkstellungsschalter ist als elektrisch leitende Kontaktbrücke ausgebildet, die drehbar an einem Gehäuseteil gelagert ist und von einem Schneckenrad verstellt wird, welches drehfest mit einer Abtriebswelle verbunden ist, über die der Wischerarm betätigt wird. Das Schneckenrad wird von der Rotorwelle des elektrischen Antriebsmotors angetrieben. Die Kontaktbrücke ist zwischen verschiedenen Kontaktstellungen zu verdrehen, in denen Kontaktlaschen der Kontaktbrücke mit verschiedenen elektrischen Leiterbahnen in elektrischen Kontakt treten. Beim Abschalten der Scheibenwischvorrichtung wird über die Kontaktbrücke eine Leiterbahn aktiviert, die unter Spannung steht, so dass trotz des Abschaltens das Schneckenrad weiter verdreht wird. Kurz vor Erreichen der Parkposition wird die Kontaktbrücke von einem Nocken auf dem Schneckenrad in eine zweite Kontaktstellung verdreht, in der die Kontaktbrücke in eine Kurzschlussposition verstellt wird, so dass der elektrische Antriebsmotor als Generator wirkt und innerhalb kürzester Zeit abgebremst wird.

Nachteilig bei dieser Ausführung ist die exponierte Position der Kontaktbrücke. Hierdurch ist die Kontaktbrücke der Gefahr von Verschmutzung ausgesetzt, was zu einer Beeinträchtigung der elektrischen Leitfähigkeit und damit zu einem Ausfall der Parkstellungsfunktion führen kann.

Ein gattungsgemäßer Scheibenwischerantrieb ist aus der DE-B-1061641 bekannt.

Die EP 1804 262 A2 zeigt eine Antriebsvorrichtung für einen Scheibenwischer, mit einer schwenkbaren Kontaktbrücke, die an einem Formteil gehalten ist, welches drehbar an einem Gehäusebauteil aufgenommen ist. Das Lager für das Formteil wird von Abstandshaltern gebildet, die Bestandteil des Gehäuses sind und Begrenzungswände eines Aufnahmeraums für das Kontaktelement bilden. Auf der dem Kontaktelement abgewandten Seite des Formteils ist ein Betätigungsteil angeordnet, das von Mitnehmern bzw. Nocken auf einem Antriebszahnrad bewegt wird. Das Betätigungsteil ist einteilig mit einer Abdeckplatte ausgeführt, die einen Aufnahmeraum zur Aufnahme des Kontaktelements überdeckt.

Aufgrund der einteiligen Ausführung von Betätigungsteil und Abdeckplatte muss eine verhältnismäßig große Baueinheit drehbar am Gehäuse gelagert werden, was mit hohen Stellkräften bzw. momenten verbunden ist.

Die GB 2175493 A zeigt ein Kontaktelement, welches über einen Lagerbolzen drehbar an einer Abdeckplatte gelagert ist, wobei das Kontaktelement über einen Absatz mit einem Nocken an einer Antriebseinheit zusammenwirkt. Das Kontaktelement, der Absatz sowie der Nocken der Antriebseinheit werden gemeinsam von der Abdeckplatte übergriffen. Somit befinden sich sowohl das Kontaktelement als auch das Betätigungsteil auf der gleichen Seite der Abdeckplatte, was einen verhältnismäßig großen Aufnahmeraum voraussetzt.

### Offenbarung der Erfindung

Der Erfindung liegt die Aufgabe zugrunde, mit einfachen konstruktiven Maßnahmen eine Antriebsvorrichtung für einen Scheibenwischer schmutzresistent auszuführen, so dass über eine lange Betriebszeit und mit hoher Funktionssicherheit verschiedene Schaltpositionen der Antriebsvorrichtung einstellbar sind.

Die erfindungsgemäße Antriebsvorrichtung für einen Scheibenwischer weist unter anderem einen Schalter zum Schalten eines elektrischen Antriebsmotors auf, wobei der Schalter mit einem drehbar gelagerten Kontaktelement versehen ist, das zwischen mindestens zwei Schaltpositionen zu verstellen ist. Das Kontaktelement ist an einer Abdeckplatte, die am Gehäuse zu befestigen ist, gehalten und an dieser drehbar gelagert. Die Abdeckplatte begrenzt einen Aufnahmeraum, in dem das Kontaktelement aufgenommen ist.

Der Abdeckplatte kommen verschiedene Funktionen zu. Zum einen ist die Abdeckplatte Träger des drehbar gelagerten Kontaktelementes, die Abdeckplatte bildet also zugleich die Lagerstelle für das Kontaktelement. Zum andern bildet die Abdeckplatte einen Schutz für das Kontaktelement, da die Abdeckplatte den Aufnahmeraum zumindest teilweise begrenzt und abschirmt, in dem das Kontaktelement aufgenommen ist. Das Kontaktelement ist dadurch vor Verschmutzung geschützt, dementsprechend ist die Gefahr signifikant reduziert, dass elektrische Kontakte zwischen dem Kontaktelement und Leiter- bzw. Kontaktbahnen durch Verschmutzung unterbrochen bzw. kurzgeschlossen werden und der elektrische Antrieb der Scheibenwischvorrichtung außer Funktion gesetzt wird.

Erfindungsgemäß ist das drehbar gelagerte Kontaktelement mit einem Betätigungsteil drehfest verbunden, das auf der dem Aufnahmeraum abgewandten Seite der Abdeckplatte angeordnet und ebenfalls drehbar an der Abdeckplatte gelagert ist. Die Abdeckplatte ist Träger des Betätigungsteils, Betätigungsteil und Kontaktelement befinden sich auf unterschiedlichen Seiten der Abdeckplatte. Auf diese Weise kann das im Aufnahmeraum angeordnete und geschützte Kontaktelement von außen über das Betätigungsteil zwischen den verschiedenen Schaltpositionen verstellt werden.

Die Verstellung des Betätigungsteils erfolgt erfindungsgemäß über mindestens ein Verstellglied, das an einem angetriebenen Bauteil der Antriebsvorrichtung angeordnet ist, vorzugsweise an der Antriebswelle bzw. einem drehfest mit der Antriebswelle verbundenen Schnecken- bzw. Zahnrad, das von dem Anker bzw. der Rotorwelle des elektrischen Antriebsmotors angetrieben wird. Das Verstellglied ist beispielsweise ein Verstellnocken, der in Anlage mit einer Kontaktfläche am Betätigungsteil zu bringen ist. Auf diese Weise kann ein Parkstellungsschalter realisiert werden, der dazu dient, den Wischerarm des Scheibenwischers nach dem Abschalten durch den Fahrer in die Parkposition zu verstellen, indem das Verstellglied nach dem Abschalten durch den Fahrer das Kontaktelement in Kontakt mit einer Leiterbahn bringt, die durch den Abschaltvorgang Teil des geschlossenen Stromkreislaufes wird, so dass trotz Abschaltens der elektrische Antriebsmotor bis zum Erreichen der endgültigen Parkposition weiterbetrieben wird.

Das Kontaktelement, welches aus einem elektrisch leitfähigen Material besteht, ist insbesondere als Metallstanzteil ausgeführt, welches in einfacher Weise und kostengünstig hergestellt werden kann. Das Stanzteil kann zu seiner endgültigen Form gebogen werden, beispielsweise zu Trapezform, wobei der mittlere Abschnitt des Trapezes zur Lagerung an der Abdeckplatte dient und die seitlichen Schenkel des Trapezes den elektrischen Kontakt zu den Leiterbahnen herstellen. An den stirnseitigen Enden der Trapezschenkel kann das Kontaktelement nach außen gespreizte, abgebogene Füße aufweisen, die in Kontakt mit den Leiterbahnen treten und ein reibungsarmes Verdrehen des Kontaktelementes zum Erreichen der verschiedenen Schaltpositionen erleichtern.

Das Betätigungsteil besteht erfindungsgemäß aus einem elektrisch isolierenden Material, insbesondere aus Kunststoff, und weist zwei Abschnitte auf, von denen ein erster Abschnitt als Lager für das Kontaktelement und der zweite Abschnitt zur Betätigung bzw. Verstellung durch das Verstellglied dient. Der Lagerabschnitt ragt in eine Lageröffnung ein, die in die Abdeckplatte eingebracht ist, wohingegen der Betätigungsabschnitt zweckmäßigerweise gegenüber dem Lagerabschnitt axial und vorzugsweise auch radial versetzt ist, um die Betätigung durch das Verstellglied zu erleichtern.

Die Abdeckplatte besteht gemäß einer ersten Ausführung aus einem elektrisch isolierenden Material, insbesondere aus Kunststoff. Gemäß einer zweiten Ausführung kann es aber auch angezeigt sein, die Abdeckplatte aus einem elektrisch leitfähigen Material zu fertigen, insbesondere aus Metall, um eine elektromagnetische Abschirmung des Aufnahmeraums und des darin enthaltenen Kontaktelementes zu erreichen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung für ein Fahrzeug,
- Fig. 2: eine Darstellung einer Antriebsvorrichtung für einen Scheibenwischer, mit einem drehbar gelagerten Kontaktelement, der einen Schalter zum Schalten des elektrischen Antriebsmotors bildet, wobei das Kontaktelement auf einem Zahnrad gelagert ist, das fest mit der Abtriebswelle verbunden ist und von der Rotorwelle des Antriebsmotors angetrieben wird,
- Fig.3 bis 6: das Kontaktelement während verschiedener Montageschritte beim Zusammenbau und Einsetzen in die endgültige Position,
- Fig. 7: eine Draufsicht auf die Antriebsvorrichtung im Bereich des Kontaktelementes,
- Fig. 8: eine Fig. 6 entsprechende Darstellung des fertig montierten Kontaktelementes, jedoch in einer modifizierten Ausführung, bei der die das Kontaktelement tragende Abdeckplatte als haubenförmiger Gehäusedeckel geformt ist,
- Fig. 9: ein weiteres Ausführungsbeispiel, bei dem die Abdeckplatte aus elektrisch leitfähigem Material gefertigt ist und ein elektromagnetische Abschirmung für das Kontaktelement bildet.

In den Figuren sind gleiche Bauteile mit gleichen Bezugszeichen versehen.

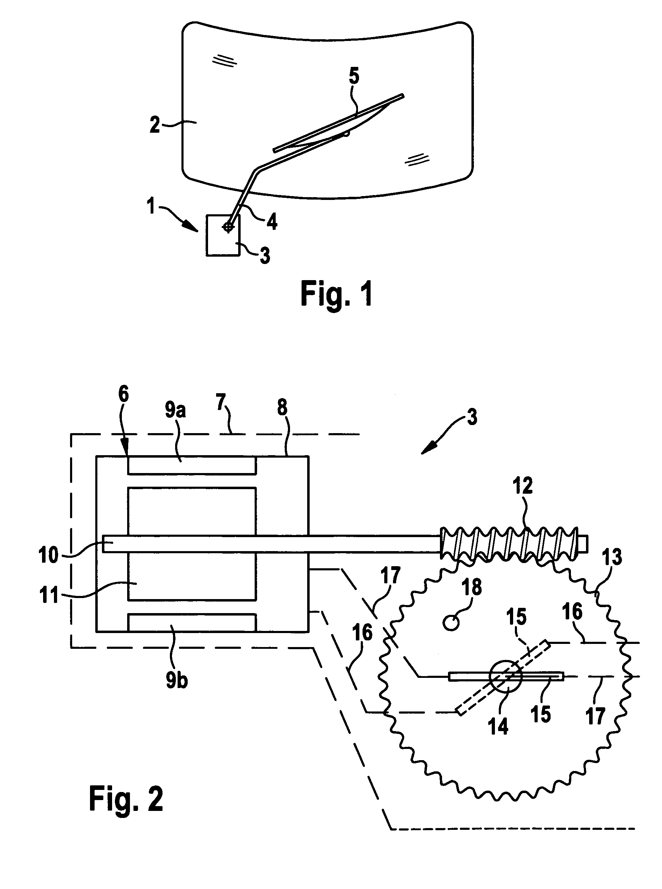

Die in Fig. 1 dargestellte Scheibenwischvorrichtung 1 dient zum Wischen einer Fahrzeugscheibe 2, beispielsweise einer Frontscheibe, und umfasst eine Antriebsvorrichtung 3 mit einem elektrischen Antriebsmotor und einen Wischerarm 4, der von dem Antriebsmotor betätigt wird und an dem ein auf der Fahrzeugscheibe 2 aufliegendes Wischblatt 5 angeordnet ist.

In Fig. 2 ist die Antriebsvorrichtung 3 der Scheibenwischvorrichtung dargestellt. In einem Gehäuse 7 der Antriebsvorrichtung ist ein elektrischer Antriebsmotor 6 angeordnet, der beispielhaft als permanenterregter Innenläufer-Gleichstrommotor ausgebildet ist. Der Antriebsmotor 6 umfasst einen Stator in einem Statorgehäuse 8, an dessen Innenseiten Permanentmagnete 9a und 9b angeordnet sind, welche den Anker umschließen, der aus der Rotorwelle 10 und einer mit der Rotorwelle verbundenen, über einen Kommutator bestrombaren Spule 11 besteht. Der außerhalb des Statorgehäuses 8 gelegene Abschnitt der Rotorwelle 10 trägt ein Gewinde 12, das mit einem Schnecken- bzw. Zahnrad 13 kämmt, welches drehfest mit einer Abtriebswelle 14 verbunden ist. Die Abtriebswelle 14 treibt den Wischerarm der Scheibenwischvorrichtung an.

Um die Antriebsvorrichtung zwischen verschiedenen Zuständen schalten zu können, ist ein Schalter vorgesehen, der ein Kontaktelement 15 umfasst, das drehbar am Gehäuse 7 der Antriebsvorrichtung gelagert und zwischen verschiednen Schaltpositionen zu verstellen ist. Je nach Schaltposition des Kontaktelementes 15 werden elektrische Kontakt- bzw. Leiterbahnen 16 oder 17 freigeschaltet. Über den Schalter können beispielsweise Parkstellungen des Wischerarms auch nach dem Ausschalten der Wischvorrichtung durch den Fahrer realisiert werden.

Zum Verstellen des Kontaktelements 15 zwischen den verschiedenen Schaltpositionen ist am Zahnrad 13 der Abtriebswelle 14 ein Verstellnocken 18 angeordnet, der in definierten Winkelstellungen des Zahnrades 13 in Kontakt mit dem Kontaktelement 15 gelangt und dieses verdreht. Da das Kontaktelement 15 am Gehäuse 7 der Antriebsvorrichtung 3 und nicht am Zahnrad 13 drehbar gelagert ist, führt der Verstellnocken 18 relativ zum Kontaktelement 15 eine Drehbewegung aus, so dass der Verstellnocken 18 bezogen auf das Kontaktelement 15 zwischen einer Kontakt- bzw. Verstellposition und einer Position ohne Kontakt zum Kontaktelement bewegt wird.

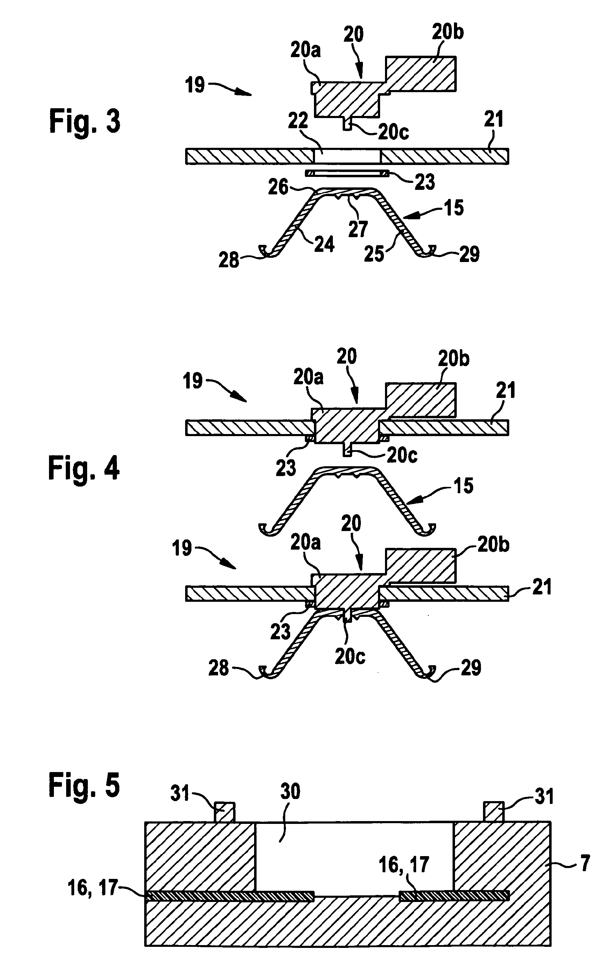

In den Figuren 3 bis 6 sind verschiedene Montageschritte bei der Montage des Schalters 19 für das Schalten der Antriebsvorrichtung 3 dargestellt. Der Schalter 19 umfasst als eigentliches Schaltglied das Kontaktelement 15 sowie ein Betätigungsteil 20, wobei Kontaktelement 15 und Betätigungsteil 20 an einer Abdeckplatte 21 gehalten und an dieser verdrehbar gelagert sind. Hierzu weist die Abdeckplatte 21 eine Lageröffnung 22 auf, in die ein Lagerabschnitt 20a des Betätigungsteils 20 einzusetzen ist (Fig. 4). Auf der Unterseite des Lagerabschnittes 20a ist ein Lagerzapfen 20c angeformt, der in eine korrespondierende Ausnehmung im Kontaktelement 15 einragt. Der Lagerabschnitt 20a des Betätigungsteils 20 kann in der Lageröffnung 22 der Abdeckplatte 21 rotieren, das Betätigungsteil 20 und das Kontaktelement 15 sind drehfest miteinander gekoppelt.

Das Betätigungsteil 20 weist zusätzlich zum Lagerabschnitt 20a einen Betätigungsabschnitt 20b auf, der mit einem Verstellteil (in Fig. 2 der Verstellnocken 18) in Kontakt treten kann, wodurch die Baueinheit, bestehend aus Betätigungsteil 20 und Kontaktelement 15 um die Rotationsachse des Lagerzapfens 20c verdreht wird. Der Betätigungsabschnitt 20b ist gegenüber dem Lagerabschnitt 20a radial und axial nach außen versetzt. Der in die Lageröffnung 22 eingesetzte Lagerabschnitt 20a wird über einen Sicherungsring 23 in der eingesetzten Position gehalten.

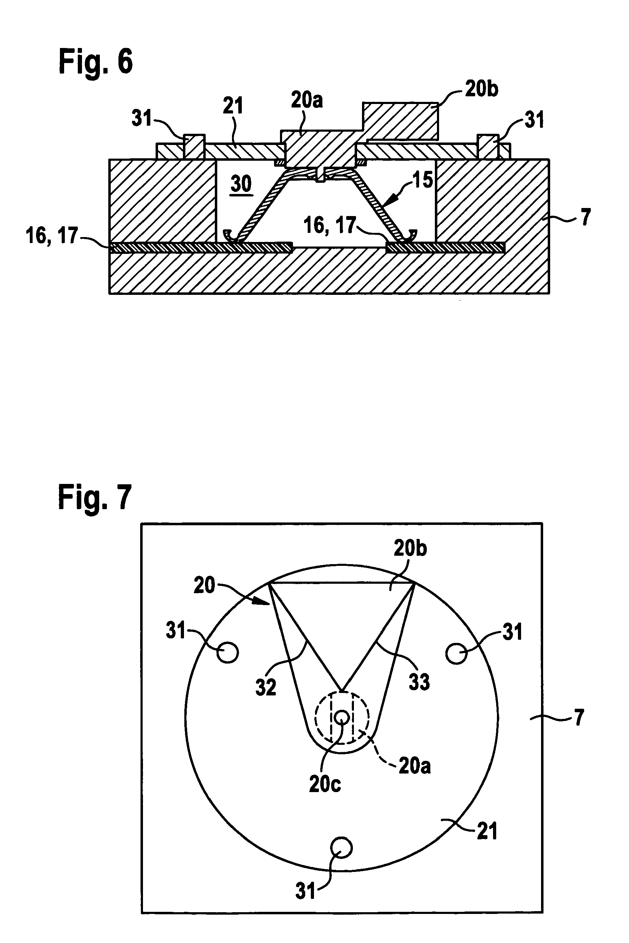

Das Kontaktelement 15 weist einen trapezförmigen Aufbau auf und umfasst seitliche Trapezschenkel 24 und 25, die über eine Grundseite 26 miteinander verbunden sind, in die eine Ausnehmung 27 für den Lagerzapfen 20c am Betätigungsteil 20 eingebracht ist. An den freien Stirnseiten weisen die Trapezschenkel 24 und 25 jeweils angeformte Kontaktschuhe 28 bzw. 29 auf, die einteilig mit dem Kontaktelement 15 ausgeführt und als teilkreisförmiger Abschnitt ausgebildet sind. Die Kontaktschuhe 28 und 29 liegen in der Einbausituation (Fig. 6) auf Kontakt mit den Leiterbahnen 16 bzw. 17, die in das Gehäuse 7 bzw. einem mit dem Gehäuse fest verbundenen Bauteil der Scheibenwischvorrichtung eingebracht sind.

Wie den Figuren 5 und 6 zu entnehmen, ist in das Gehäuse 7 ein Aufnahmeraum 30 eingebracht, der zur Aufnahme des Kontaktelementes 15 ausgebildet ist. Am Boden des Aufnahmeraumes 30 verlaufen die Leiterbahnen 16 bzw. 17, die in entsprechender Stellung des Kontaktelements 15 elektrisch miteinander verbunden sind.

Auf der Außenseite des Gehäuses 7 sind die Aufnahmeöffnung 30 seitlich begrenzende Befestigungsnocken 31 angeordnet, die in fertig montierter Position (Fig. 6) die Abdeckplatte 21 einfassen bzw. diese am Gehäuse 7 sichern. Die Abdeckplatte 21 deckt den Aufnahmeraum 30 mit dem darin angeordneten Kontaktelement 15 vollständig ab, so dass das Kontaktelement 15 und die Leiterbahnen 16 und 17 sicher aufgenommen sind und frei von Schmutz bleiben.

Wie der Draufsicht der Fig. 7 zu entnehmen, weist der Betätigungsabschnitt 20b des Betätigungsteils 20 einen dreieckförmigen Querschnitt auf und besitzt seitliche Anschlagflächen 32 und 33, an denen das Verstellglied in der Kontaktposition anliegt.

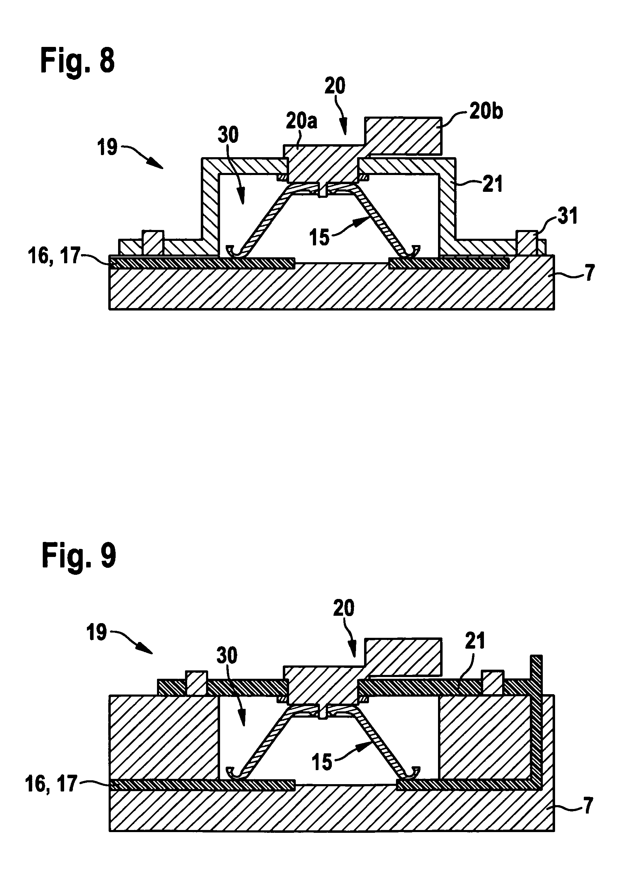

In Fig. 8 ist ein weiteres Ausführungsbeispiel für einen Schalter 19 dargestellt. In diesem Ausführungsbeispiel ist der Aufnahmeraum 30 nicht als Ausnehmung im Gehäuse 7 ausgebildet, so wie dies beim vorhergehenden Ausführungsbeispiel der Fall war; vielmehr ist der Aufnahmeraum 30 in der Abdeckplatte 21 gebildet, die etwa Hauben- oder Topfform aufweist, wobei das Innere der Haube den Aufnahmeraum für das Kontaktelement 15 bildet. Die Oberseite des Gehäuses 7 kann durchgehend und frei von Ausnehmungen ausgebildet sein.

Das Ausführungsbeispiel nach Fig. 9 entspricht in seinem Grundaufbau demjenigen nach Fig. 6, jedoch mit dem Unterschied, dass gemäß Fig. 9 die Abdeckplatte 21 nicht aus elektrisch isolierendem Material, sondern aus einem elektrisch leitfähigen Metall gefertigt ist. Hierdurch soll eine elektromagnetische Abschirmung des im Aufnahmeraum 30 aufgenommenen Kontaktelementes 15 erreicht werden. Gegebenenfalls ist die Abdeckplatte 21 elektrisch mit einer Leiterbahn 16, 17 verbunden.

## Patentansprüche

1. Antriebsvorrichtung für einen Scheibenwischer, mit einem in einem Gehäuse (7) angeordneten Schalter (19) zum Schalten eines elektrischen Antriebsmotors (6), wobei der Schalter (19) ein drehbar gelagertes Kontaktelement (15) aufweist, das zwischen mindestens zwei Schaltpositionen zu verstellen ist, wobei
das Kontaktelement (15) an einer Abdeckplatte (21) gehalten und drehbar gelagert ist, die am Gehäuse (7) zu befestigen ist, wobei die Abdeckplatte (21) einen Aufnahmeraum (30) begrenzt, in dem das Kontaktelement (15) aufgenommen ist,
dass das Kontaktelement (15) mit einem Betätigungsteil (20) verbunden ist, das auf der dem Aufnahmeraum (30) abgewandten Seite der Abdeckplatte (21) angeordnet ist, dass das Betätigungsteil (20) mit mindestens einem Verstellglied (18) zusammenwirkt, das an einem angetriebenen Bauteil (13) der Antriebsvorrichtung (3) angeordnet ist, **dadurch gekennzeichnet, dass** das Betätigungsteil (20) aus einem elektrisch isolierenden Material gefertigt ist; dass das Betätigungsteil (20) einen Lagerabschnitt (20a) sowie einen Betätigungsabschnitt (20b) aufweist, wobei der Lagerabschnitt (20a) in eine Lageröffnung (22) in der Abdeckplatte (21) einragt.

2. Antriebsvorrichtung nach Anspruch 1,
**dadurch gekennzeichnet, dass** die Abdeckplatte (21) als ebene Platte ausgebildet ist.

3. Antriebsvorrichtung nach Anspruch 1,
**dadurch gekennzeichnet, dass** der Aufnahmeraum (30) in die Abdeckplatte (21) eingebracht ist.

4. Antriebsvorrichtung nach einem der Ansprüche 1 bis 3,
**dadurch gekennzeichnet, dass** das Verstellglied (18) auf einem Zahnrad (13) einer Abtriebswelle (14) angeordnet ist, die einen Wischerarm (4) des Scheibenwischers betätigt.

5. Antriebsvorrichtung nach einem der Ansprüche 1 bis 4,
**dadurch gekennzeichnet, dass** das Verstellglied als Verstellnocken (18) ausgebildet ist, der in Anlage mit einer Kontaktfläche (32, 33) am Betätigungsteil (20) zu bringen ist.

6. Antriebsvorrichtung nach einem der Ansprüche 1 bis 5,
**dadurch gekennzeichnet, dass** das Betätigungsteil (20) aus Kunststoff gefertigt ist.

7. Antriebsvorrichtung nach einem der Ansprüche 1 bis 6,
**dadurch gekennzeichnet, dass** der Betätigungsabschnitt (20b) gegenüber dem Lagerabschnitt (20a) axial und/oder radial versetzt ist.

8. Antriebsvorrichtung nach einem der Ansprüche 1 bis 7,
**dadurch gekennzeichnet, dass** die Abdeckplatte (21) aus einem elektrisch isolierenden Material, insbesondere aus Kunststoff gefertigt ist.

9. Antriebsvorrichtung nach einem der Ansprüche 1 bis 8,
**dadurch gekennzeichnet, dass** die Abdeckplatte (21) aus einem elektrisch leitfähigen Material gefertigt ist.

10. Antriebsvorrichtung nach einem der Ansprüche 1 bis 9,
**dadurch gekennzeichnet, dass** das Kontaktelement (15) als Metall-Stanzteil ausgebildet ist.

11. Antriebsvorrichtung nach einem der Ansprüche 1 bis 10,
**dadurch gekennzeichnet, dass** das Kontaktelement (15) trapezförmig ausgebildet ist.

12. Antriebsvorrichtung nach einem der Ansprüche 1 bis 11,
**dadurch gekennzeichnet, dass** der Schalter (19) ein Parkstellungsschalter ist, über den der Scheibenwischer nach dem Abstellen in eine Parkposition zu verstellen ist.

## Claims

1. Drive device for a windscreen wiper, with a switch (19) which is arranged in a housing (7) and is intended for switching an electric drive motor (6), wherein the switch (19) has a rotatably mounted contact element (15) which can be adjusted between at least two switching positions, wherein the contact element (15) is held and mounted rotatably on a cover plate (21) which can be fastened to the housing (7), wherein the cover plate (21) delimits a receiving space (30) in which the contact element (15) is held, wherein the contact element (15) is connected to an actuating part (20) which is arranged on that side of the cover plate (21) which faces away from the receiving space (30), and wherein the actuating part (20) interacts with at least one adjustment element (18) which is arranged on a driven component (13) of the drive device (3), **characterized in that** the actuating part (20) is manufactured from an electrically insulating material, **in that** the actuating part (20) has a bearing section (20a) and an actuating section (20b), the bearing section (20a) projecting into a bearing opening (22) in the cover plate (21).

2. Drive device according to Claim 1, **characterized in that** the cover plate (21) is designed as a flat plate.

3. Drive device according to Claim 1, **characterized in that** the receiving space (30) is inserted into the cover plate (21).

4. Drive device according to one of Claims 1 to 3, **characterized in that** the adjustment element (18) is arranged on a toothed wheel (13) of an output shaft (14) which actuates a wiper arm (4) of the windscreen wiper.

5. Drive device according to one of Claims 1 to 4, **characterized in that** the adjustment element is designed as an adjustment cam (18) which can be brought into contact with a contact surface (32, 33) on the actuating part (20).

6. Drive device according to one of Claims 1 to 5, **characterized in that** the actuating part (20) is manufactured from plastic.

7. Drive device according to one of Claims 1 to 6, **characterized in that** the actuating section (20b) is offset axially and/or radially in relation to the bearing section (20a).

8. Drive device according to one of Claims 1 to 7, **characterized in that** the cover plate (21) is manufactured from an electrically insulating material, in particular from plastic.

9. Drive device according to one of Claims 1 to 8, **characterized in that** the cover plate (21) is manufactured from an electrically conductive material.

10. Drive device according to one of Claims 1 to 9, **characterized in that** the contact element (15) is designed as a metal punched part.

11. Drive device according to one of Claims 1 to 10, **characterized in that** the contact element (15) is of trapezoidal design.

12. Drive device according to one of Claims 1 to 11, **characterized in that** the switch (19) is a parking position switch via which the windscreen wiper can be adjusted after having been deposited into a parking position.

## Revendications

1. Dispositif d'entraînement pour un essuie-glace, comprenant un commutateur (19) disposé dans un boîtier (7), pour commuter un moteur d'entraînement électrique (6), le commutateur (19) présentant un élément de contact monté à rotation (15) qui peut être déplacé entre au moins deux positions de commutation, l'élément de contact (15) étant maintenu et monté à rotation sur une plaque de recouvrement (21) qui doit être fixée au boîtier (7), la plaque de recouvrement (21) limitant un espace de réception (30) dans lequel est reçu l'élément de contact (15),
l'élément de contact (15) étant connecté à une partie d'actionnement (20) qui est disposée du côté de la plaque de recouvrement (21) opposé à l'espace de réception (30), la partie d'actionnement (20) coopérant avec au moins un organe de réglage (18) qui est disposé sur un composant entraîné (13) du dispositif d'entraînement (3), **caractérisé en ce que** la partie d'actionnement (20) est fabriquée en un matériau électriquement isolant, **en ce que** la partie d'actionnement (20) présente une portion de palier (20a) ainsi qu'une portion d'actionnement (20b), la portion de palier (20a) pénétrant dans une ouverture de palier (22) dans la plaque de recouvrement (21).

2. Dispositif d'entraînement selon la revendication 1,
**caractérisé en ce que** la plaque de recouvrement (21) est réalisée sous forme de plaque plane.

3. Dispositif d'entraînement selon la revendication 1,
**caractérisé en ce que** l'espace de réception (30) est pratiqué dans la plaque de recouvrement (21).

4. Dispositif d'entraînement selon l'une quelconque des revendications 1 à 3,
**caractérisé en ce que** l'organe de réglage (18) est disposé sur une roue dentée (13) d'un arbre de sortie (14) qui actionne un bras d'essuie-glace (4) de l'essuie-glace.

5. Dispositif d'entraînement selon l'une quelconque des revendications 1 à 4,
**caractérisé en ce que** l'organe de réglage est réalisé sous forme de came de réglage (18) qui doit être amenée en appui avec une surface de contact (32, 33) contre la partie d'actionnement (20).

6. Dispositif d'entraînement selon l'une quelconque des revendications 1 à 5,
**caractérisé en ce que** la partie d'actionnement (20) est fabriquée en plastique.

7. Dispositif d'entraînement selon l'une quelconque des revendications 1 à 6,
**caractérisé en ce que** la portion d'actionnement (20b) est décalée axialement et/ou radialement par rapport à la portion de palier (20a).

8. Dispositif d'entraînement selon l'une quelconque des revendications 1 à 7,
**caractérisé en ce que** la plaque de recouvrement (21) est fabriquée en un matériau électriquement isolant, en particulier en plastique.

9. Dispositif d'entraînement selon l'une quelconque des revendications 1 à 8,
**caractérisé en ce que** la plaque de recouvrement (21) est fabriquée en un matériau électriquement conducteur.

10. Dispositif d'entraînement selon l'une quelconque des revendications 1 à 9,
**caractérisé en ce que** l'élément de contact (15) est réalisé sous forme de pièce découpée métallique.

11. Dispositif d'entraînement selon l'une quelconque des revendications 1 à 10,
**caractérisé en ce que** l'élément de contact (15) est réalisé sous forme trapézoïdale.

12. Dispositif d'entraînement selon l'une quelconque des revendications 1 à 11, **caractérisé en ce que** le commutateur (19) est un commutateur de position de stationnement, par le biais duquel l'essuie-glace peut être déplacé dans une position de stationnement après l'arrêt.
